# EUROPÄISCHE PATENTANMELDUNG

(11) **EP 3 388 213 A2**
(43) Veröffentlichungstag der Anmeldung: **17.10.2018**
(21) Anmeldenummer: 18158144.8
(22) Anmeldetag: 22.02.2018
(51) Int. Cl.: B27N 9/00, B27N 3/00, B27N 3/18, B27N 7/00, B27N 1/00, B27N 3/02, B27N 3/04

(54) **VERFAHREN ZUR HERSTELLUNG EINER SCHWER ENTZÜNDBAREN UND/ODER VERFESTIGTEN HOLZFASERPLATTE**

(30) Priorität: 24.02.2017 DE 102017203086
(71) Anmelder: Cefla Deutschland GmbH, 53340 Meckenheim (DE)
(72) Erfinder: Stahl, Gerhard, 53474 Bad Neuenahr-Ahrweile (DE)
(74) Vertreter: dompatent von Kreisler Selting Werner - Partnerschaft von Patent- und Rechtsanwälten mbB

(57) **Zusammenfassung**

Bei einem Verfahren zur Herstellung einer schwer entzündbaren und/oder verfestigten Holzfaserplatte erfolgt zunächst ein Anordnen einer zugeschnittenen Holzfaserplatte an einer Bearbeitungsvorrichtung. Anschließend wird Flammschutzmittel und/oder Verfestigungsmittel auf eine Oberseite der Holzfaserplatte aufgebracht. Das Aufgebrachte Mittel wird in die Holzfaserplatte eingesaugt bzw. eingedrückt. Dies erfolgt durch Erzeugung einer Druckdifferenz zwischen der Oberseite und einer Unterseite der Holzfaserplatte.

## Beschreibung

Die Erfindung betrifft ein Verfahren zur Herstellung einer schwer entzündbaren und/oder verfestigten Holzfaserplatte beispielsweise einer Pressspanplatte, einer MDF-Platte und dergleichen.

Zur Reduzierung der Entzündbarkeit von Holz ist es bekannt, das Holz mit einem Flammschutzmittel zu behandeln. Üblicherweise wird ein entsprechendes Flammschutzmittel auf die Oberseite des Holzes aufgebracht. Um eine gute Feuerschutzklasse zu erzielen, das heißt die Entzündbarkeit des Holzes zu reduzieren, müssen entsprechend dicke Schichten an Flammschutzmittel aufgebracht werden. Dies ist aufgrund des erheblichen Verbrauchs an Flammschutzmittel teuer. Ferner ist hierdurch die Möglichkeit der Oberflächengestaltung beschränkt.

EP 0255 950 A2 betrifft ein Verfahren, bei dem Hartfaserplatten imprägniert werden, um schwerentflammbare Platten zu erhalten. Die Platten werden dazu mit einer wässrigen Salzlösung getränkt und einem Kesseldruckverfahren unterzogen. Eine gleichmäßige Durchdringung der Platte ist nicht gewährleistet.

DE 103 14 974 A1 betrifft ein Verfahren zur Herstellung von Formkörpern. Hierbei werden Fasern in einer Vorform angeordnet und anschließend mit Wasserglas getränkt. Ein entsprechendes Vorgehen kann die Festigkeit der Platte negativ beeinflussen. Das Verfahren kann nicht selektiv auf einzelne Platten angewendet werden, sondern nur chargenweise innerhalb einer industriellen Produktion.

Eine Aufgabe der Erfindung ist es, eine Holzfaserplatte zu schaffen, die eine geringe Entzündbarkeit aufweist.

Die Lösung der Aufgabe erfolgt erfindungsgemäß durch die Merkmale des Anspruchs 1.

Das erfindungsgemäße Verfahren betrifft die Herstellung einer schwer entzündlichen Holzfaserplatte wie eine Pressspanplatte, einer MDF-Platte und dergleichen. In einem ersten Schritt wird eine zugeschnittene Holzfaserplatte an einer Bearbeitungsvorrichtung angeordnet. In der Bearbeitungsvorrichtung erfolgt sodann ein Aufbringen von Flammschutzmittel auf eine Oberseite der Holzfaserplatte. Es erfolgt anschließend ein Erzeugen einer Druckdifferenz zwischen der Oberseite und einer Unterseite der Holzfaserplatte zum Einsaugen des Flammschutzmittels in die Holzfaserplatte. Beispielsweise kann dies durch Aufsetzen einer Druckerzeugungsvorrichtung auf die Oberseite der Holzfaserplatte erfolgen. Bei der Druckerzeugungsvorrichtung handelt es sich beispielsweise um einen in Richtung der Platte offenen, quaderförmigen Körper, der mit einer entsprechenden Druckluftquelle verbunden ist. Alternativ kann an einer Unterseite der Platte eine entsprechende Saugvorrichtung angeordnet werden, wobei auch eine Druck- und eine Saugvorrichtung miteinander kombiniert werden können.

Durch das Erzeugen der Druckdifferenz erfolgt ein Einsaugen des Flammschutzmittels in die Holzfaserplatte. Dies führt zu einem besseren Schutz des Holzes und dazu, dass die Entzündbarkeit deutlich verringert wird. Dadurch ist bei gleicher Feuerschutzklasse die Menge an erforderlichem Flammschutzmittel deutlich reduziert oder die Feuerschutzklasse kann entsprechend erhöht werden. Dies liegt insbesondere darin begründet, dass das Flammschutzmittel nicht nur an der Oberfläche der Holzfaserplatte vorgesehen ist, was zur Folge hat, dass sobald das Flammschutzmittel verbrannt bzw. aufgebraucht wird, das Feuer nicht unmittelbar mit leicht entzündlichem Holz in Berührung kommt. Durch das erfindungsgemäße Einsaugen ist, auch wenn obere Schichten der Holzfaserplatte zerstört oder beschädigt sind, weiterhin Flammschutzmittel vorhanden, das in der Platte angeordnet ist. Unbehandeltes Holz einer Holzfaserplatte wird somit dem Feuer nicht oder erst später ausgesetzt, wobei dies davon abhängig ist wie tief das Flammschutzmittel in die Holzfaserplatte eingesaugt wird.

Ein besonderer Vorteil des Verfahrens ist, dass es auf einzelne, regulär hergestellte Platten angewendet werden kann.

Ein weiterer besonderer Vorteil ist, dass das Verfahren selektiv auf Bereiche der Platte angewendet werden kann. So können beispielsweise Bereiche einer Platte, die bei der Nutzung mit Metall in Kontakt kommen, mit besonders hohem Flammschutzmittelgehalt ausgestattet werden, während andere Bereiche keinen oder nur geringen Flammschutzmittelgehalt aufweisen.

Das erfindungsgemäße Verfahren gestattet insbesondere eine Individualisierung von Platten. Erfindungsgemäß können Platten der Baustoffklasse A1, A2 und B1 erhalten werden. Diese können aus der gleichen großtechnischen Produktion stammen und anschließend mit unterschiedlichen Menge Flammschutzmittel behandelt werden.

Als Flammschutzmittel eignen sich sowohl halogenierte Flammschutzmittel als auch stickstoffbasierte oder Organophosphor-Flammschutzmittel, wobei nichthalogenierte Verbindungen bevorzugt sind. Besonders bevorzugte Verbindungen sind Ammoniumpolyphosphate, Triarylphosphate, Trialkylphosphate, Melaminpolyphosphate und Phosphinate.

Typische geeignete Verbindungen sind TCEP (Tris(chlorethyl)phosphat), TCPP (Tris(chlorpropyl)phosphat), TDCPP (Tris(dichlorisopropyl)phosphat), TPP (Triphenylphosphat), TEHP (Tris-(2-ethylhexyl)phosphat), TKP (Trikresylphosphat), ITP (Isopropyliertes Triphenylphosphat), Mono-, Bis- und Tris(isopropylphenyl)phosphate, RDP (Resorcinol-bis(diphenylphosphat)), BDP (Bisphenol-A-bis(diphenylphosphat)) und TBP (Tributylphosphat).

Bevorzugt wirken diese Flammschutzmittel derart, dass aufgrund der Hitze ein Aufschäumen des Mittels erfolgt. Dies bewirkt, dass das Holz später bzw. erst bei höheren Temperaturen brennt. Aufgrund des Einsaugens des Flammschutzmittels in die Holzfaserplatte nimmt diese weiteres Flammschutzmittel auf. Hierdurch ist die Zeit, in der das entsprechende Holz dem Feuer widersteht, deutlich länger.

Bevorzugt ist es, dass das Flammschutzmittel sowohl an der Oberseite als auch an der Unterseite aufgebracht wird und somit von beiden Seiten in die Platte eingesaugt bzw. eingedrückt wird. Dies kann in aufeinanderfolgenden Schritten erfolgen, wobei beispielsweise derselbe Schritt zur Erzeugung der Druckdifferenz durchgeführt wird und zwischendurch die Holzfaserplatte gewendet wird.

Des Weiteren ist es bekannt, Holzfaserplatten zu verfestigen. Hierzu wird ein Verfestigungsmittel in die Holzfaserplatte eingebracht, so dass insbesondere die Gefahr des Aufquellens durch Feuchtigkeit verringert ist.

Als Verfestigungsmittel wird vorzugsweise ein Mittel eingesetzt, das Polyurethan (PUR) bildet, also Mischungen von Dialkoholen (Diolen) beziehungsweise Polyolen mit Di- oder Polyisocyanaten. Solche Mischungen werden auch als Prepolymere eingesetzt, also schon teilweise reagierte Monomere.

In besonders bevorzugter Ausführungsform erfolgt daher zusätzlich zum Einbringen von Flammschutzmittel das Einbringen von Verfestigungsmittel in die Holzfaserplatte. Das Verfestigungsmittel wird hier vorzugsweise ebenfalls in die Holzfaserplatte eingesaugt bzw. eingedrückt. Dies erfolgt wiederum durch Erzeugen einer entsprechenden Druckdifferenz. Hierbei ist es möglich, die beiden Mittel nacheinander in die Holzfaserplatte einzubringen. Besonders bevorzugt ist es, das Flammschutzmittel und das Verfestigungsmittel gemeinsam in die Holzfaserplatte einzubringen. Insbesondere werden die beiden Mittel vor dem Einsaugen bzw. Eindrücken in die Holzfaserplatte miteinander vermischt. Hierdurch kann eine homogene Verteilung beider Mittel realisiert werden.

Das Auftragen des Flammschutzmittels und ggf. des Verfestigungsmittels auf eine Oberseite bzw. eine Unterseite einer Holzfaserplatte erfolgt vorzugsweise durch Gießen, so dass das Material gleichmäßig auf der Oberfläche verteilt ist.

Alternativ kann dies auch durch Auftragen mit einer Rolle oder einem Quast erfolgen.

Vorzugsweise werden 20 bis 200 g/m² an Flammschutzmittel aufgebracht. Ferner werden vorzugsweise 200 bis 1200 g/m², in einigen Fällen auch 200 bis 1500 g/m² Verfestigungsmittel aufgebracht.

Bevorzugte Mengen bezogen auf einen Kubikmeter Holzfaserplatte betragen 5 bis 50 kg an Flammschutzmittel und 50 bis 500 kg an Verfestigungsmittel.

Bevorzugt werden Flammschutzmittel und Verfestigungsmittel zusammen aufgebracht.

Bei einer 8 mm Platte sollte die Gesamtenge 50 g/m² möglichst nicht unterschreiten, weil kleine Mengen schwieriger gleichmäßig zu verteilen sind, insbesondere durch Inhomogenitäten der Platten. Typischerweise sollte die Gesamtmenge an einzusaugendem oder einzudrückendem Mittel im Bereich von 50 bis zu 250 g/m², oder bis zu 500 g/m² und möglichst nicht über 1 kg/m² bei einer 8 mm Platte liegen.

Eine 8 mm Platte, in die ein Kilo Mittel eingesaugt wird, würde ihre Dichte um ca. 125 kg/m³ erhöhen. Bei typischen Holzfaserplatten mit Dichten im Bereich von etwa 480 kg/m² bis 980 kg/m² ist dies eine spürbare Gewichtserhöhung.

Eine weitere unabhängige Erfindung, die in bevorzugter Ausführungsform mit der vorstehenden Erfindung betreffend das Einbringen von Flammschutzmittel kombiniert wird, betrifft das Verfestigen von Holzfaserplatten.

Bei diesem Verfahren wird zunächst eine zu befestigende geschnittene Holzfaserplatte an einer Bearbeitungs- oder Verfestigungsvorrichtung angeordnet. Anschließend wird Verfestigungsmittel auf die Oberseite der Holzfaserplatte aufgebracht, wobei dies insbesondere durch Aufsprühen erfolgt.

Als Verfestigungsmittel wird vorzugsweise ein Mittel eingesetzt, das Polyurethan (PUR) bildet, also Mischungen von Dialkoholen (Diolen) beziehungsweise Polyolen mit Di- oder Polyisocyanaten. Solche Mischungen werden auch als Prepolymere eingesetzt, also schon teilweise reagierte Monomere.

Verfestigungsmittel wird durch Erzeugen einer Druckdifferenz zwischen der Oberseite und einer Unterseite der Holzfaserplatte in die Holzfaserplatte eingesaugt bzw. eingedrückt. Das Verfestigen der Platte erfolgt durch das Trocknen oder Reagieren des Verfestigungsmaterials. Das verwendete Verfestigungsmaterial reagiert beim Einsaugen mit der in der Holzplatte vorhandenen Restfeuchte.

Erfindungsgemäß wird vor dem Aufbringen des Verfestigungsmittels auf die Oberseite der Holzfaserplatte auf diese ein Reaktions-Beschleunigungsmittel aufgebracht. Im nächsten Schritt kann entweder unmittelbar das Verfestigungsmittel aufgebracht werden, so dass das Verfestigungsmittel zusammen mit dem Reaktions-Beschleunigungsmittel eingesaugt wird oder das Reaktions-Beschleunigungsmittel wird zunächst in die Holzfaserplatte eingesaugt, anschließend das Verfestigungsmittel aufgebracht und sodann dieses in die Holzfaserplatte eingesaugt. Durch das Vorsehen von Reaktions-Beschleunigungsmittel erfolgt eine schnellere Reaktion des Verfestigungsmittels. Vorzugsweise wird als Reaktions-Beschleunigungsmittel ein Mittel verwendet, das Wasser enthält. Insbesondere weist das Mittel mehr als 90% Wasser auf. Besonders bevorzugt ist die Verwendung von Wasser als Reaktions-Beschleunigungsmittel. Das Aufbringen oder gegebenenfalls Einsaugen des Wassers bzw. des Reaktions-Beschleunigungsmittels in die Holzfaserplatte führt zu einer Erhöhung der Feuchtigkeit in der Platte. Dies führt zu einer verbesserten Reaktion des Verfestigungsmittels in der Platte und somit zu einer besseren und schnelleren Verfestigung der Platte.

Vorzugsweise werden 3 bis 5 g/m³ Reaktions-Beschleunigungsmittel, insbesondere Wasser, pro m³ Holzfaserplatte aufgebracht. Bevorzugt ist es, dass das Reaktions-Beschleunigungsmittel aufgewalzt wird.

Um eine möglichst schnelle Weiterverarbeitung oder Lagerung der verfestigten Holzfaserplatte zu ermöglichen, ist es ferner bevorzugt, dass diese anschließend getrocknet wird.

Bei der Reaktion zwischen Verfestigungsmittel und Reaktions-Beschleunigungsmittel entsteht Wärme. Insofern besteht ein Risiko der Selbstentzündung der Holzfaserplatte. Diesem Risiko kann durch eine entsprechende Belüftung bzw. Kühlung der Platte entgegengewirkt werden.

Bei einer besonders bevorzugten erfindungsgemäßen Weiterbildung erfolgt daher die Kombination des Einbringens eines Reaktions-Beschleunigungsmittels sowie eines Flammschutzmittels. Durch Vorsehen des Flammschutzmittels ist die Gefahr der Selbstentzündung auf Grund der Reaktionstemperatur erheblich verringert, insbesondere vollständig vermieden. Insofern ist die Kombination der beiden vorstehend beschriebenen Erfindungen die einerseits das Einbringen von Flammschutzmittel und andererseits das Einbringen von Reaktions-Beschleunigungsmittel betreffen vorzugsweise in den beschriebenen Ausführungsformen besonders bevorzugt.

Alle zitierten Dokumente sind im vollen Umfang mit in die Offenbarung einbezogen, soweit diese Offenbarung nicht im Widerspruch zu der Lehre der Erfindung steht.

## Patentansprüche

1. Verfahren zur Herstellung einer schwer entzündbaren Holzfaserplatte mit den Schritten:
- Anordnung einer zugeschnittenen Holzfaserplatte in einer Bearbeitungsvorrichtung,
- Aufbringung von Flammschutzmittel auf eine Oberseite der Holzfaserplatte und
- Erzeugen einer Druckdifferenz zwischen der Oberseite und einer Unterseite der Holzfaserplatte zum Einsaugen/Eindrücken des Flammschutzmittels in die Holzfaserplatte.

2. Verfahren nach Anspruch 1, **dadurch gekennzeichnet, dass** das Flammschutzmittel zusammen mit einem Verfestigungsmittel aufgebracht wird.

3. Verfahren nach Anspruch 2, **dadurch gekennzeichnet, dass** das Flammschutzmittel und das Verfestigungsmittel gemeinsam aufgebracht werden.

4. Verfahren nach einem der Ansprüche 1 bis 3, **dadurch gekennzeichnet, dass** je m³ Holzfaserplatte 5 bis 50 kg Flammschutzmittel aufgebracht werden.

5. Verfahren nach einem der Ansprüche 2 bis 4, **dadurch gekennzeichnet, dass** je m³ Holzfaserplatte 50 bis 500 kg Verfestigungsmittel aufgebracht werden.

6. Verfahren nach einem der Ansprüche 2 bis 5, **dadurch gekennzeichnet, dass** das Verfestigungsmittel und/oder das Flammschutzmittel aufgesprüht werden.

7. Verfahren nach einem der Ansprüche 2 bis 6, **dadurch gekennzeichnet, dass** vor dem Aufbringen von Verfestigungsmittel ein Reaktions-Beschleunigungsmittel auf die Oberseite der Holzfaserplatte aufgebracht wird.

8. Verfahren nach einem der Ansprüche 1 bis 7, **dadurch gekennzeichnet**, die Holzfaserplatte mindestens zwei Bereiche aufweist, die abweichende Mengen an Flammschutzmittel pro Volumen enthalten.

9. Verfahren zur Herstellung einer verfestigten Holzfaserplatte mit den Schritten:
- Anordnen einer zugeschnittenen Holzfaserplatte in eine Bearbeitungsvorrichtung,
- Aufbringen von Verfestigungsmittel auf eine Oberseite der Holzfaserplatte und
- Erzeugen einer Druckdifferenz zwischen der Oberseite und einer Unterseite der Holzfaserplatte zum Einsaugen bzw. Eindrücken des Verfestigungsmittels in die Holzfaserplatte,
**dadurch gekennzeichnet, dass**
vor dem Aufbringen von Verfestigungsmittel ein Reaktions-Beschleunigungsmittel auf die Oberseite der Holzfaserplatte aufgebracht wird.

10. Verfahren nach Anspruch 7 bis 9, **dadurch gekennzeichnet, dass** das Reaktions-Beschleunigungsmittel Wasser, insbesondere mehr als 90 Gew-% Wasser, aufweist.

11. Verfahren nach einem der Ansprüche 7 bis 10, **dadurch gekennzeichnet, dass** je m³ Holzfaserpatte 3 bis 5 Gramm Reaktions-Beschleunigungsmittel aufgebracht werden.

12. Verfahren nach einem der Ansprüche 7 bis 11, **dadurch gekennzeichnet, dass** das Reaktions-Beschleunigungsmittel auf die Oberseite der Holzfaserplatte aufgewalzt wird.

13. Verfahren nach einem der Ansprüche 1 bis 12, **dadurch gekennzeichnet, dass** die Holzfaserplatte nach dem Einsaugen bzw. Eindrücken des Verfestigungsmittels und/oder des Flammschutzmittels in einer Trockenvorrichtung getrocknet wird.
